# EUROPÄISCHE PATENTSCHRIFT

(11) **EP 1 367 107 B1**
(45) Veröffentlichungstag und Bekanntmachung des Hinweises auf die Patenterteilung: **05.04.2006**
(21) Anmeldenummer: 03010351.9
(22) Anmeldetag: 08.05.2003
(51) Int. Cl.: C09J 7/02, B05B 15/04

(54) **Verwendung eines Klebebands zur Abdeckung bei Maler- und Lackieranwendungen**
Use of an adhesive tape as masking tape for painting works
Utilisation d'un ruban adhésif comme ruban de masquage pour les opérations de peinture

(30) Priorität: 28.05.2002 DE 10223632
(43) Veröffentlichungstag der Anmeldung: 03.12.2003
(73) Patentinhaber: tesa AG, 20253 Hamburg (DE)
(72) Erfinder: Hoelger, Christof-Gottfried, 77749 Hohberg (DE)

(56) Entgegenhaltungen:
- EP-A- 1 097 975
- DE-C- 4 318 277
- FR-A- 1 522 942

## Beschreibung

Die vorliegende Erfindung betrifft die Verwendung eines Klebebands zur Abdeckung bei Maler- und Lackieranwendungen mit einer weiterreißbaren Folie als Trägermaterial, auf die einseitig eine Klebemasse aufgetragen ist.

Selbstklebende Abdeckbänder für Maler- und Lackieranwendungen, im folgenden als Abdeckklebeband bezeichnet, müssen einige wesentliche Eigenschaften aufweisen, damit sie die besonderen an sie gestellten Anforderungen erfüllen. Dies sind - ohne daß diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die Beständigkeit gegenüber Farbdurchschlag, die Beständigkeit gegenüber Feuchtigkeit, eine dosierte Klebkraft auf der eigenen Rückseite, eine ausreichend hohe Wasserfestigkeit sowie eine gute Handeinreißbarkeit.

Eine Kraft von 12 bis 28 N/cm bei einer Dehnung zwischen 10 % und 150 % ermöglicht eine faltenfreie Kurvenverklebung der Klebebänder und eine plane Verklebung auf sphärischen Untergründen.

In diesen Fällen darf sich das Klebeband weder teilweise vom Untergrund lösen, noch an den gedehnten Kanten einschnüren (Halsbildung, Necking), um Farbunterläufer beziehungsweise ungleichmäßige Lackkanten zu vermeiden.

Während einige der Eigenschaften auf die Klebmasse oder andere Funktionsschichten des Abdeckklebebands zurückzuführen sind, so basieren die Dehnbarkeit, die Zugfestigkeit und die Handeinreißbarkeit wesentlich auf den physikalischen Eigenschaften des Verwendeten Trägermaterials.

Deshalb werden für Abdeckklebebänder bevorzugt imprägnierte Papierträger und dann solche eingesetzt, die durch das Flächengewicht des Trägers, die Art des verwendeten Zellstoffes, den Mahlgrad und bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.
Einschränkungen bei der Verwendung von Papierträgern ergeben sich häufig aufgrund der stark reduzierten Festigkeit der Papierträger bei Feuchtigkeitseinfluß, zum Beispiel auch im Außenbereich, weiterhin sind Papierträger nachteilig in Fällen, in denen für die Qualität der Farbkante eine geringste Dicke des Trägers gefordert wird.

Geprägte Folien aus PVC finden als Abdeckband Anwendung im Malerbereich, die Folie zeigt eine ausgezeichnete Feuchtigkeitsbeständigkeit, die besonders für die Anwendung im Außenbereich nützlich ist. Die Prägung der Folie stellt die Handeinreißbarkeit der Folie sicher und erleichtert entscheidend die Verarbeitbarkeit.

Weiterhin werden dünne Folien als sogenannte Putzbänder eingesetzt, die Klebebänder lassen sich von Hand einreißen. Dünne Folien mit niedriger Reißkraft, hoher Dehnung und der daraus resultierenden Tendenz zum neck-in sind wegen der fehlenden Dimensionsstabilitat beim Abkleben nachteilig, zudem werden sie an der Abrißstelle stark gedehnt und weisen eine stark verformte, gewellte Abrißkante auf, die ebenfalls für den Einsatz als Maler- oder Lackierband nactiteilig ist.

Eine Reißkraft längs im Bereich von 12 bis 30 N/cm ermöglicht ein leichtes Abreißen von Hand. Allerdings sind diese Reißkräfte schon so niedrig, daß eine Entfernung des Klebebandes nach der Anwendung ohne das Abreißen des Bandes problematisch ist.

Im Lackierbereich werden Klebebänder mit Folienträger (zum Beispiel tesa ® 4104) als Lackierband eingesetzt, besonders, wenn hohe Anforderungen an die Farbkante gestellt werden. Wegen der mangelnden Handeinreißbarkeit müssen bei der Applikation Hilfsmittel zum Ablängen eingesetzt werden.

Für diese Anwendungen sind auch Folien, die aufgrund ihrer geringen Dehnung und Reißkraft gut von Hand abgelängt werden können, sind als Träger für Klebebänder bekannt (tesa ® 7164, Finelinesortiment). Diese Folien sind allerdings sehr teuer.

Mit der DE 43 18 277 C1 ist die Verwendung von Zackenschnittmessern zum Längsschneiden von doppelseitig klebenden Selbstklebebändem mit PP-Trägem bekannt geworden, die insbesondere als Teppichverlegeband Verwendung finden.
Bevorzugt weisen die Zacken des Zackenschnittmessers eine Zackenhöhe von 0,3 bis 6 mm, insbesondere 0,4 bis 1 mm auf. Aufgrund der sich daraus ergebenden Zackung der Schnittkante erhöht sich die Handeinreißbarkeit des Klebebands. Für die Anwendung im Maler und Lackierbereich sind solche gezackten Kanten natürlich wegen des unerwünschten Abbildung der Zacken auf die Farbkante ungeeignet. Des weiteren neigen derartige Klebebänder bei der Lagerung zur Verschmutzung.
Schließlich sind die Zackenschnittmesser technisch aufwendig herzustellen und somit auch die damit hergestellten Produkte teuer.

Aufgabe der Erfindung ist es, ein Klebeband zur Abdeckung bei Maler- und Lackieranwendungen mit einer Folie als Trägermaterial, auf die eine Klebemasse aufgetragen ist, zur Verfügung zu stellen, wobei das Klebeband die geschilderten Nachteile des Standes der Technik nicht aufweist.

Gelöst wird diese Aufgabe durch die Verwendung eines Klebebands, wie es im Hauptanspruch niedergelegt ist. Gegenstand der Unteransprüche sind vorteilhafte Weiterbildungen des Erfindungsgegenstands.

Demgemäß betrifft die Erfindung die Verwendung eines Klebebands zur Abdeckung bei Maler- und Lackieranwendungen mit einer quer zur Ablängrichtung weiterreißbaren Folie als Trägermaterial, auf die einseitig eine Klebemasse aufgetragen ist, wobei das Klebeband farbig und/oder nicht transparent ist und eine oder beide Längskanten des Klebebandes über den gesamten Bereich Einkerbungen mit einer Breite von weniger als 1000 µm und einer Tiefe von kleiner t 00 µm aufweisen, wobei die Einkerbungen unregelmäßig angeordnet und von unterschiedlicher Tiefe sind.

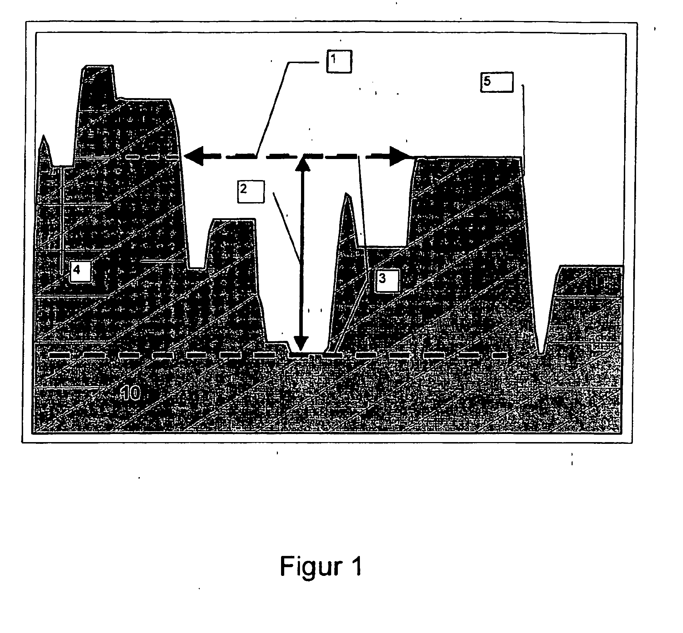

Eine Einkerbung im Randbereich des Klebebands 10, also an der Schnittkante 5, weist einen ungeraden, lokale Minima und lokale Maxima aufweisenden kurvenförmigen oder zackigen Verlauf auf und wird hier durch eine Breite 1 und einer dazugehörigen Tiefe 2 beschrieben (siehe Figur 1). Die Tiefe 2 einer Einkerbung wird hier als die Distanz zwischen zwei in Längsrichtung des Klebebandes parallel verlaufende Geraden bezeichnet, wovon die eine Gerade ein Minimum schneidet und die zweite ein Maximum. Bei einem gleichmäßig sinusförmigen Verlauf schneidet eine Gerade immer mehrere benachbarte lokale Minima 4 beziehungsweise Maxima.
Bei einem unregelmäßigem Verlauf ist dies normalerweise nicht der Fall, die Tiefe einer Einkerbung wird durch eine Gerade beschrieben, die nur durch ein einziges Maximum geht. Die von einer Einkerbung in Anspruch genommene Breite ist die Strecke zwischen den Schnittpunkten der Geraden durch ein Maximum einerseits und mit der Längskante des Klebebandes andererseits. Die Tiefe einer Einkerbung mit einer bestimmten Breite bezieht sich natürlich auf das Minimum mit der größten Distanz zwischen den Schnittpunkten.

In einer ersten vorteilhaften Ausführungsform der Erfindung sind die Einkerbungen nur an einer der Längskanten vorhanden.

Weiter vorzugsweise sind größere und kleinere Einkerbungen vorhanden, wobei besonders bevorzugt die größeren Einkerbungen eine Tiefe von 15 bis 100 µm und die kleineren Einkerbungen eine Tiefe von 5 bis 15 µm aufweisen.

In einer weiteren vorteilhaften Ausführungsform der Erfindung sind die größeren Einkerbungen mit einer Häufigkeit von 1 bis 10 Stück/mm Kante und/oder die kleineren Einkerbungen mit einer Häufigkeit von 5 bis 30 Stück/mm Kante angeordnet.

In einer weiteren vorteilhaften Ausführungsform der Erfindung sind die Weiterreißkräfte im Mittel kleiner 10 N, insbesondere kleiner 1 N.

Die Einkerbungen stellen eine verbesserte Handeinreißbarkeit in Querrichtung (bezogen auf Erstreckungsrichtung des Klebebands) sicher, ohne daß die für die Anwendung notwendige Stabilität eingeschränkt wird.
Das Klebeband ist sehr leicht von Hand abreißbar, was dem Verarbeiter ein Abreißen ohne hohen Kraftaufwand beziehungsweise ohne Zuhilfenahme von Hilfsmittel wie Schere oder Messer nach der Applikation ermöglicht. Dadurch ergibt sich eine erhebliche Zeitersparnis im Verarbeitungsprozeß.
Die Einkerbungen sind aber so klein daß die Anforderungen an das Malerergebnis hinsichtlich der Farbkante erfüllt werden.
Durch die Unregelmäßigkeit der Einkerbungen sind diese weniger sichtbar, als beispielsweise eine Kante, die im Zackenschnitt hergestellt worden ist.

Überraschend und für den Fachmann völlig unerwartet zeigt ein Klebeband mit einer weiterreißbaren Folie als Trägermaterial, das im Kantenbereich auf einer mikroskopischen Skala Einkerbungen mit Breite von kleiner 1000 µm und einer Tiefe von kleiner 100 µm aufweist, exakt die Eigenschaften, die für die Verwendung als Abdeckklebeband benötigt werden.

Vorzugsweise werden als Material für die Folie BOPP, MOPP, PVC oder PET eingesetzt, die darüber hinaus in einer besonders vorteilhaften Ausführungsform der Erfindung eine Dicke von 20 bis 100 µm, insbesondere von 30 bis 50 µm, aufweist.

All diese aufgezählten Folien lassen sich als Trägerfolie erfindungsgemäß einsetzen. Eine vorteilhafte Ausführung der Erfindung stellt eine Folie dar, die farbig und/oder nicht transparent ist.

In einer weiteren vorteilhaften Ausführungsform der Efindung ist die Weiterreißkraft der Folie -beschrieben durch die Schenkelweiterreißkraft (EN ISO 13937-2 bei 100 mm/min Vorschubgeschwindigkeit) - vorteilhaft < 10N, insbesondere kleiner 1 N.

Sodann stellt eine hervorragende Ausgestaltung der Erfindung dar, wenn die Folie mit einer druckempfindlichen Klebemasse ausgerüstet ist.

In einer weiteren vorteilhaften Ausführungsform der Erfindung beträgt der Auftrag an Klebemasse 15 bis 30 g/m²,

Die Klebemasse der efindungsgemäßen Klebebänder kann eine Selbstklebemasse, die aus der Gruppe der Naturkautschuke oder der Synthesekautschuke oder aus einem beliebigen Blend aus Naturkautschuken und/oder Synthesekautschuken besteht, enthalten, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.% zugesetzt werden, und zwar bezogen auf den Gesamtelastomeranteil.
Stellvertretend genannt seien an dieser Stelle vor allem die besonders verträglichen Styrol-Isopren-Styrol (SIS) und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Aüf die Darstellung des Wssensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vemetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenotharz- oder Düsocyanatvernetzungssysteme mit den entsprechenden Aktivatoren, epoxidierte Polyester- und Acrylat-Harze sowie deren Kombinationen einsetzbar. ' Die Vemetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vemetzer kann auch.durch IR-Strahlen oder hochenergetisehe Wechselfelder erfolgen.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen
- Massen ist darin zu sehen, däß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
   Die Lösung der Masse kann 5 bis 80 Gew.%, insbesondere 30 bis 70 Gew.-% Lösungsmittel enthalten.
   Vorzugsweise werden handelsübliche Lösungsmittel eingesetzt, insbesondere niedrig siedende Kohlenwasserstoffe, Ketone, Alkohole und/oder Ester.
   Weiter vorzugsweise werden Einschnecken-, Zweischnecken- oder Mehrschneckenextruder mit einer oder insbesondere zwei oder mehreren Entgasungseinheiten eingesetzt.
   In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren, Estern, substituierten (Meth)acrylamiden, Maleinsäureanhydrid und anderen Vinytverbindungen, wie Vinylestern, insbesondere Viriylacetat, Vinylalkoholen und/oder. Vinylethern eingesetzt.
Der Restlösungsmittel-Gehalt sollte unter 1 Gew.-% betragen. '

Eine Klebemasse, die sich als besonders geeignet zeigt, ist eine niedermotekutare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Um eine ausreichende Haftung aber auch eine leichte Abrollbarkeit sowie eine Wiederablösbarkeit nach der Anwendung zu gewährleisten, sollte die Klebkraft auf Stahl im Bereich von 2,0 und 4,8 N/cm liegen.

Gegebenenfalls kann rückseitig ein Trennlack zur Verbesserung der Abrollbarkeit aufgebracht werden.

In bestimmten Fällen kann umgekehrt eine Behandlung der Rückseite mit einer Corona oder einem Lack zur Verbesserung der Farbhaftung auf der Rückseite vorgenommen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).
Auf den Inhalt des besagten Kapitels wird hiermit Bezug genommen, und dessen Inhalt wird Teil dieser Offenbarung und Erfindung.

Weiter vorzugsweise ist das Klebeband durch die Klebmasse und/oder einen aufgebrachten Primer farbig (zum Beispiel weiß) und/oder optisch nicht transparent.

Weiter vorzugsweise ist die Folie auf Rückseite bedruckt, insbesondere dann, wenn nur eine Längskante mit den Einkerbungen versehen ist, um beispielsweise den Benutzer des Klebebands auf die reißbare Kante hinzuweisen.

Das Klebeband besitzt eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die Beständigkeit gegenüber Farbdurchschlag, die Beständigkeit gegenüber Feuchtigkeit, eine dosierte Klebkraft auf der eigenen Rückseite, eine ausreichend hohe Wasserfestigkeit sowie eine exzellente Handeinreißbarkeit.

Insbesondere letztere ist durch die geeignete Wahl entsprechender Einkerbungen hervorragend optimiert, so daß Folienklebebänder zu dem genannten Zweck eingesetzt werden können und eben nicht wie bisher nur Klebebänder mit einem Papierträger.

Im folgenden soll die Erfindung anhand eines Beispieles erläutert werden, ohne die Erfindung unnötig einschräken zu wollen;

### Beispiel

Eine 38 µm dicke, transparente PVC-Folie wurde mit einem Primer auf wäßriger Basis beschichtet. Das Auftragsgewicht des Primers nach der anschließenden Trocknung lag bei 0,6 g/m². Anschließend wurde eine in Benzin dispergierte Kautschukklebemasse aufgetragen und das Benzin im anschließenden Trocknungsgang entfernt. Das Auftragsgewicht der Klebemasse betrug 23 g/m².

Die Klebemasse bestand aus Naturkautschuk, einer Mischung von Harzen und Füllstoffen. Ein Anteil von TiO₂ an den Füllstoffen sorgte für eine weiße Färbung der Klebemasse, die auch die Farbe des Abdeckbandes bestimmte. Aus diesem Material wurden Rollen der Abmessung 50 m x 33 mm mit rauher Schnittkante hergestellt.

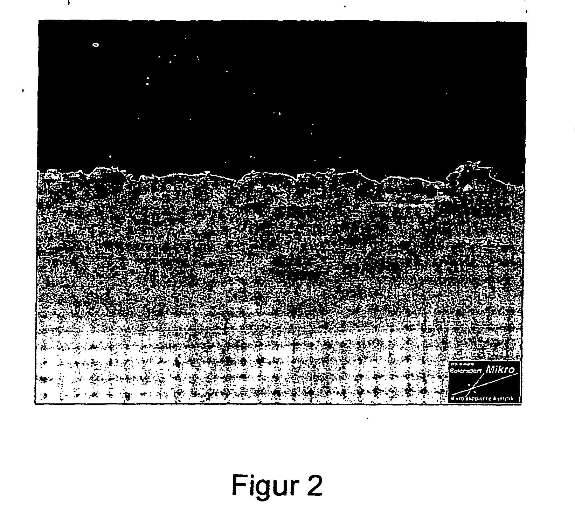

Einen mikroskopischen Ausschnitt der rauhen Schnittkante zeigt Figur 2.

Die Länge der Seitenkanten des Bildausschnittes betragen 2,25 x 1,85 mm. Das Abdeckband weist in dem gezeigten Abschnitt acht Einkerbungen mit einer unterschiedlich ausgeprägten Tiefe kleiner 100. µm und größer 15 µm in unregelmäßigem Abstand sowie eine Vielzahl noch kleinerer, Einkerbungen auf.

Das Material zeigte eine Klebkraft auf Stahl von 3,1 N/cm. Die. Dicke des gesamten Abdeckbandes lag bei 65 µm, die Höchstzugkraft des Abdeckbandes bei einer Prüfgeschwindigkeit von 300 mm/min bei 48 N/15mm, die Reißdehnung betrug 22,5 %, die Abrollkraft bei einer Abzugsgeschwindigkeit von 30 m/min betrug 4,7 N/cm.

Anwendungstechnische Teste wurden durchgeführt.
Dabei wurden Streifen des Abdeckbandes auf Aluminiumbleche verklebt und mit handelsüblichen Farblacken und mit Dispersionsfarben überstrichen. Nach unterschiedlichen Trocknungszeiten wurden die Teststreifen wieder entfernt, das Malergebnis und die Verarbeitbarkeit wurde beurteilt.

Das Abdeckband konnte hervorragend abgelängt und verklebt werden. Die Beurteilung zeigte eine ausgezeichnete dünne Farbkante, keine Unterläufer, keine Farbdurchschläge, keine Masserückstände nach dem Entfemen, eine ausreichende Farbhaftung und gute Eigenschaften beim Entfernen des Klebebandes.

## Patentansprüche

1. Verwendung eines Klebebands zur Abdeckung bei Maler- und Lackieranwendungen mit einer quer zur Ablängrichtung weiterreißbaren Folie als Trägermaterial, auf die einseitig eine Klebemasse aufgetragen ist, wobei das Klebeband farbig und/oder nicht transparent ist, indem die Folie farbig und/oder nicht transparent ist, und eine oder beide Längskanten des Klebebandes über den gesamten Bereich Einkerbungen mit einer Breite von weniger als 1000 µm und einer Tiefe von kleiner 100 *µ*m aufweisen, wobei die Einkerbungen unregelmäßig angeordnet und von unterschiedlicher Tiefe sind, wobei größere und kleinere Einkerbungen vorhanden sind, wobei die größeren Einkerbungen eine Tiefe von 15 bis 100 *µ*m und die kleineren Einkerbungen eine Tiefe von 5 bis 15 *µ*m aufweisen.

2. Verwendung eines Klebebands nach Anspruch 1, **dadurch gekennzeichnet, dass** die Einkerbungen nur an einer der Längskanten vorhanden sind.

3. Verwendung eines Klebebands nach den Ansprüchen 1 oder 2, **dadurch gekennzeichnet, dass** die größeren Einkerbungen mit einer Häufigkeit von 1 bis 10 Stück/mm Kante und/oder die kleineren Einkerbungen mit einer Häufigkeit von 5 bis 30 Stück/mm Kante angeordnet sind.

4. Verwendung eines Klebebands nach zumindest einem der Ansprüche 1 bis 3, **dadurch gekennzeichnet, dass** die Weiterreißkräfte (Schenkelweiterreißkraft nach-EN-ISO 13937-2-bei 100 mm/min Vorschubgeschwindigkeit) im Mittel kleiner 10 N betragen.

5. Verwendung eines Klebebands nach zumindest einem der Ansprüche 1 bis 4, **dadurch gekennzeichnet, dass** als Material für die Folie PVC, BOPP, MOPP oder PET eingesetzt werden.

6. Verwendung eines Klebebands nach zumindest einem der Ansprüche 1 bis 5, **dadurch gekennzeichnet, dass** die Folie eine Dicke von 20 bis 100 *µ*m aufweist.

7. Verwendung eines Klebebands nach zumindest einem der Ansprüche 1 bis 6, **dadurch gekennzeichnet, dass** die Folie auf der Rückseite eine Bedruckung aufweist.

8. Verwendung eines Klebebands nach zumindest einem der Ansprüche 1 bis 7, **dadurch gekennzeichnet, dass** die Folie zur Verankerung der Farbmasse auf dem Träger mit einem Primer ausgerüstet ist.

9. Verwendung eines Klebebands nach zumindest einem der Ansprüche 1 bis 8, **dadurch gekennzeichnet, dass** das Klebeband zwischen der Folie und der Masseschicht eine Bedruckung aufweist.

## Claims

1. Use of an adhesive tape for masking during painting and decorating applications, having a film backing material in which a tear can be propagated transversely with respect to the direction from which individual lengths of the tape are taken, on one side of said backing material an adhesive has been applied, the adhesive tape being coloured and/or nontransparent since the film is coloured and/or nontransparent, and one or both longitudinal edges of the adhesive tape having over the entire area notches having a width of less than 1000 µm and a depth of less than 100 µm, the notches being irregularly arranged and of differing depth, larger and smaller notches being present, the larger notches having a depth of from 15 to 100 µm and the smaller notches having a depth of from 5 to 15 µm.

2. Use of an adhesive tape according to Claim 1,
**characterized in that** the notches are present only on one of the longitudinal edges.

3. Use of an adhesive tape according to Claim 1 or 2, **characterized in that** the larger notches are arranged with a frequency of from 1 to 10/mm of edge and/or the smaller notches are arranged with a frequency of from 5 to 30/mm of edge.

4. Use of an adhesive tape according to at least one of Claims 1 to 3, **characterized in that** the tear propagation forces (tear propagation force determined on trouser-shaped test specimens according to EN ISO 13937-2 with a 100 mm/min advance speed) are on average less than 10 N.

5. Use of an adhesive tape according to at least one of Claims 1 to 4, **characterized in that** PVC, BOPP, MOPP or PET is used as material for the film.

6. Use of an adhesive tape according to at least one of Claims 1 to 5, **characterized in that** the film has a thickness of from 20 to 100 µm.

7. Use of an adhesive tape according to at least one of Claims 1 to 6, **characterized in that** the film has printing on the reverse.

8. Use of an adhesive tape according to at least one of Claims 1 to 7, **characterized in that** the film has been provided with a primer for the purpose of anchoring the adhesive on the backing.

9. Use of an adhesive tape according to at least one of Claims 1 to 8, **characterized in that** the adhesive tape has printing between the film and the adhesive layer.

## Revendications

1. Utilisation d'un ruban adhésif pour le masquage dans des applications de peinture et de laquage, comportant en tant que matériau de support une feuille déchirable transversalement à la direction de découpe à longueur, sur laquelle est appliquée d'un côté une masse adhésive, le ruban adhésif étant coloré et/ou non transparent, en ce que la feuille est colorée et/ou non transparente, et l'un ou les deux bords longitudinaux du ruban adhésif présentant sur toute la région des encoches d'une largeur de moins de 1000 µm et d'une profondeur de moins de 100 µm, les encoches étant agencées de manière irrégulière et étant de profondeurs différentes, avec présence d'encoches plus grandes et plus petites, les plus grandes encoches ayant une profondeur de 15 à 100 µm et les plus petites encoches une profondeur de 5 à 15 µm.

2. Utilisation d'un ruban adhésif selon la revendication 1, **caractérisée en ce que** les encoches ne sont présentes que sur l'un des bords longitudinaux.

3. Utilisation d'un ruban adhésif selon la revendication 1 ou 2, **caractérisée en ce que** les plus grandes encoches sont agencées avec une fréquence de 1 à 10 encoches par mm de bord et/ou les plus petites encoches avec une fréquence de 5 à 30 encoches par mm de bord.

4. Utilisation d'un ruban adhésif selon au moins l'une quelconque des revendications 1 à 3, **caractérisée en ce que** la force de déchirement (force de déchirement sur éprouvette de type pantalon selon EN ISO 13937-2 à une vitesse d'avance de 100 mm/min) est en moyenne de moins de 10 N.

5. Utilisation d'un ruban adhésif selon au moins l'une quelconque des revendications 1 à 4, **caractérisée en ce que** l'on met en oeuvre en tant que matériau de feuille du PVC, du BOPP, du MOPP ou du PET.

6. Utilisation d'un ruban adhésif selon au moins l'une quelconque des revendications 1 à 5, **caractérisée en ce que** la feuille présente une épaisseur de 20 à 100 µm.

7. Utilisation d'un ruban adhésif selon au moins l'une quelconque des revendications 1 à 6, **caractérisée en ce que** la feuille présente une impression sur l'envers.

8. Utilisation d'un ruban adhésif selon au moins l'une quelconque des revendications 1 à 7, **caractérisée en ce que** la feuille est munie d'une couche d'apprêt aux fins d'ancrage de la masse colorée sur le support.

9. Utilisation d'un ruban adhésif selon au moins l'une quelconque des revendications 1 à 8, **caractérisée en ce que** le ruban adhésif présente une impression entre la feuille et la couche de masse.
